# EUROPÄISCHE PATENTSCHRIFT

(11) **EP 1 875 011 B1**
(45) Veröffentlichungstag und Bekanntmachung des Hinweises auf die Patenterteilung: **16.11.2016**
(21) Anmeldenummer: 05742879.9
(22) Anmeldetag: 21.05.2005
(51) Int. Cl.: E04F 15/02, B32B 13/04, B32B 19/04, E04C 2/26, E04C 2/04

(54) **FUSSBODENBELAG**
FLOOR COVERING
REVETEMENT DE SOL

(30) Priorität: 14.04.2005 DE 102005017392
(43) Veröffentlichungstag der Anmeldung: 09.01.2008
(60) Teilanmeldung: 16191310.8
(73) Patentinhaber: Scholz, Karl-Heinz Peter, 63768 Hösbach (DE)
(72) Erfinder: SCHOLZ, Karl-Heinz, 63768 Hösbach (DE)
(74) Vertreter: Schacht, Benny Marcel Corneel
(86) Internationale Anmeldenummer: PCT/EP2005/005526
(87) Internationale Veröffentlichungsnummer: WO 2006/108446

(56) Entgegenhaltungen:
- EP-A- 1 085 138
- EP-A- 1 520 947
- EP-A1- 0 446 693
- DE-A1- 10 156 775
- DE-U1- 7 904 458
- DE-U1- 8 615 282
- US-A- 3 849 235
- US-A- 4 112 176
- US-A- 5 425 986
- US-A- 5 740 858
- US-A1- 2003 101 681
- US-A1- 2005 055 931

## Beschreibung

Die Erfindung betrifft ein Fußbodenpaneel mit einem plattenförmigen Kern und einer oberen Deckschicht, mit mechanischen Verriegelungsmitteln wenigstens an zwei einander gegenüberliegenden Kanten der Fußbodenpaneele.

Derartige Fußbodenpaneele sind in verschiedenen Ausführungsformen bekannt. Zum Stand der Technik kann beispielsweise auf die EP 843 763 B1 und die EP 698 162 B1 Bezug genommen werden.

Die EP 843 763 B1 beschreibt Fußbodenpaneele mit einem Kern, der auf Basis von Holz hergestellt worden ist. Als bevorzugt werden in der Druckschrift Holzwerkstoffe, insbesondere MDF und HDF genannt. Die EP 698 162 B1 offenbart ein Fußbodenpaneel, dessen Material als "kompaktes Laminat" bezeichnet wird. Als Möglichkeit für die Verbindung von zwei Paneelen wird ein Aluminiumprofil angegeben, das an jedem der Paneele befestigt werden kann und jeweils eine Verbindung zu einem angrenzenden Paneel gleicher Art ermöglicht. In jedem Fall soll die Verbindung so erfolgen, dass zwei zusammengefügte Fußbodenpaneele weder senkrecht zu ihrer Verbindungslinie auseinanderdriften noch entlang dieser Verbindungslinie verschoben werden können. Auch eine gegenseitige Bewegung in der Höhe ist ausgeschlossen.

Alle herkömmlichen Fußbodenpaneele der obigen Art, zu denen neben den Paneelen, die in den beiden genannten Druckschriften beschrieben werden, zahlreiche weitere Ausführungsformen gehören, bestehen aus Holzwerkstoffen, in den letzten Jahren überwiegend aus MDF oder HDF.

Holzwerkstoffe sind brennbar. Die herkömmlichen Paneele gehören daher einer Bauteilklasse an, die ihre Verwendung in vielen Gebäuden, z. B. vielen öffentlichen Gebäuden ausschließt. Holzwerkstoffe haben in der Regel eine Reihe von weiteren Nachteilen. Sie sind zumeist nicht formaldehydfrei. Angesichts ihres relativ geringen Gewichtes sind sie hinsichtlich Luftschallschutz und Trittschallschutz ungünstig. Dies gilt trotz zahlreicher Versuche der Hersteller, die Schalleigenschaften durch untergelegte oder untergeklebte Dämmmatten zu verbessern.

Holzwerkstoffe sind im übrigen nur begrenzt resistent gegen Feuchtigkeit, da sie in der Regel dazu neigen, unter Feuchtigkeitseinfluss aufzuquellen und sich entsprechend zu verformen.

DE 79 04 458 U1 zeigt eine Platte zur Herstellung eines Estrichs. Dieses Dokument schlägt vor die Oberseite der Platte mit einer entsprechenden Fußbodenbeschichtung zu versehen, beispielsweise mit einer Teppichfliese oder einer PVC-Beschichtung. Die Estrichplatte ist eine monolitische Gipsplatte mit faserförmiger Armierungslage und trägt auf ihrem Umfang Ausnehmungen die für Fremdverbindungsmittel vorgesehen sind.

EP1 085 138 A2 offenbart ein Fußbodenpaneel, das alle Merkmale des Oberbegriffs des Anspruchs 1 enthält.

Aus EP 0 446 693 A1 ist ein aus eine Gipsfaserplatte bestehendes Fußbodenpaneel bekannt, das aus einer verpressten Mischung von Gipsbindemittel und Fasern hergestellt ist. Die fertige Gipsfaserplatte weist eine Rohdichte von mindestens 1.500 kg/m (1,5 g/cm³) auf.

Der Erfindung liegt die Aufgabe zugrunde, ein Fußbodenpaneel der eingangs genannten Art zu schaffen, der insbesondere hinsichtlich des Brandschutzes verbesserte Eigenschaften aufweist und daher in Anwendungsfällen einsetzbar ist, die den bisher verwendeten, aus Holzwerkstoffen bestehenden Paneelen verschlossen waren.

Zur Lösung dieser Aufgabe ist das erfindungsgemäße Fußbodenpaneel gekennzeichnet durch die Merkmale des Anspruchs 1.

Ein mineralisches Material ist unbrennbar und eignet sich daher zur Lösung der gestellten Aufgabe. Das mineralische Material kann Gips sein. In Betracht kommen auch Zement oder Gesteinsmehl, gegebenenfalls in Verbindung Füllstoffen oder Bindemitteln. Vorzugsweise wird in das mineralische Material ein Armierungs-Material eingemischt, das einen Anteil von 5 bis 25%, bezogen auf das Volumen, aufweisen kann.

Das Armierungsmaterial kann aus Altpapier gewonnen werden, dessen Zellstofffasern als Armierungsmaterial ausreichen. Alternativ oder in Kombination können Textilfasern, Glasfasern, Kohlenstofffasern zur Armierung des mineralischen Materials verwendet werden,

Angesichts der Verwendung des mineralischen Materials für die Herstellung des Kerns beträgt dessen Dichte mehr als 1,000 kg/m³.

Diese hohe Dichte wirkt sich vorteilhaft hinsichtlich des Trittschallschutzes aus, und auch der Luftschallschutz wird verbessert. Die Wärmeleitfähigkeit und auch die Fähigkeit zur Wärmespeicherung ist gegenüber Holzwerkstoffplatten verbessert, so dass die erfindungsgemäßen Paneele vorteilhaft in Verbindung mit Fußbodenheizungen eingesetzt werden können.

Für die Art der Verriegelungsmittel zwischen benachbarten Fußbodenpaneelen gibt es auf dem Markt zahlreiche geeignete Vorbilder, von denen viele auf den in den beiden oben genannten Druckschriften beschriebenen Lösungen basieren. Im Kern handelt es sich bei diesen Verriegelungsmitteln um Nut-Feder-Verbindungen, die so modifiziert sind, dass sie ein Auseinanderdriften oder ein sich Verschieben benachbarter Platten im obigen Sinn durch Formschluss ausschließen. Zumeist befindet sich an Nut und/oder Feder ein Vorsprung und am Gegenstück eine Ausnehmung, die ineinander greifen. Die Herstellung der Verbindung kann erfolgen durch Zusammenrasten im Sinn einer Klickverbindung oder auch durch Einwinkeln der benachbarten Teile in Bezug aufeinander, wie es bereits in der GB 2 256 023 aus dem Jahre 1991 beschrieben wird. Eine Klickverbindung erfordert eine geringfügige Elastizität des Materials des Kerns, die bei den meisten in Betracht kommenden Kern Materialien ausreichend vorhanden ist. Dies gilt auch für das gemäß der vorliegenden Erfindung verwendete mineralische Material. Durch Einbettung geeigneter Füllstoffe kann die Elastizität des Materials erhöht werden.

Die Verriegelung kann derart erfolgen, dass benachbarte Paneele mit gewisser elastischer Vorspannung zusammengezogen werden. Dadurch wird eine dichte Verbindung zwischen den benachbarten Paneelen erreicht, die allerdings nicht flüssigkeitsdicht sein kann, so dass bei herkömmlichen Paneelen, die eine gewisse Feuchtigkeitsresistenz haben sollen, eine Kantenimprägnierung erforderlich ist oder sogar darüber hinausgehende Maßnahmen. Auf der anderen Seite kann es aber auch zweckmäßig sein, zwischen benachbarten Paneelen ein gewisses Spiel zuzulassen, wie es die eingangs genannte EP 698 162 B1 beschreibt.

Die Verriegelungsmittel sind im übrigen einstückig aus dem Kernmaterial gebildet, wie es die eingangs genannte EP 843 763 B1 vorgibt. Es ist aber auch möglich, gesonderte Verbindungselemente zu verwenden, die gegebenenfalls aus anderem Material als dem Kern der Paneele bestehen können. Ein Vorbild liefert insoweit die eingangs genannte EP 698 162 B1.

Auf dem Kern einer erfindungsgemäßen Platte befindet sich in fest integrierter Form die Deckschicht, die auch als Nutzschicht bezeichnet werden kann. Kern und Deckschicht bilden eine zusammenhängende, für den Gebrauch bzw. das Verlegen fertige Einheit, die keine Nachbehandlung erfordert.

Die Deckschicht kann aus einem üblichen Laminat aus Dekorschicht und widerstandsfähiger Schutzschicht bestehen. Die Dekorschicht kann ein Dekorpapier sein, das mit einem aminoplastischen Harz, etwa Melaninharz getränkt ist, in das beispielsweise zur zusätzlichen Befestigung und Sicherung gegen Verschleiß harte Partikel wie Aluminiumoxid-Partikel eingebettet werden können. Das Dekorpapier kann mit dem aminoplastischen Kunstharz getränkt sein, oder dieses kann als Folie aufgelegt werden. Zahlreiche Vorbilder sind aus dem Bereich der eingangs geschilderten herkömmlichen Laminatpaneele bekannt.

Die Deckschicht kann auch eine Textilschicht sein. Es kann sich etwa um ein Nadelvlies handeln. Unterschiedliche Kunststoffmaterialien kommen in Betracht, etwa Matten oder Auflagen aus Polyurethan oder Polyolefin. Auch Linoleum oder linoleumähnliche Materialien können verwendet werden. Das verwendete Material kann auf Rutschsicherheit ausgelegt sein. In jedem Fall bildet der plattenförmige Kern mit dieser als Nutzschicht verwendbaren Deckschicht eine Einheit, die als Einheit verlegt wird.

Die Deckschicht kann insbesondere so ausgelegt werden, dass sie schalldämpfend wirkt oder den Gehkomfort erhöht. Insoweit kommen Materialien aus Polyurethan oder auch Polyolefin in Betracht.

Auf der Rückseite des Kerns kann sich eine zusätzliche Dämmschicht zur Dämpfung von Körperschall oder Trittschall befinden. Alternativ können sich auf der Unterseite der den Kern bildenden Paneele Kanäle für die Aufnahme von Leitungen befinden. Heizungs- und/oder Kühlelemente können in den Kern eingebettet sein.

Die erfindungsgemäßen Fußbodenpaneele können Eigenschaften zur Ableitung elektrostatischer Aufladungen aufweisen. In Betracht kommt beispielsweise eine elektrisch leitende Schicht zwischen dem Kern und der Deckschicht. In den Kern selbst können elektrisch leitende Elemente eingebettet sein. Schließlich kann auch die Deckschicht elektrisch leitend ausgebildet sein.

Zwischen benachbarten Paneelen können durch geeignete Dimensionierung Fugen gebildet werden, in die ein Fugenband oder ein Fugenmaterial unter dekorativen Aspekten eingefügt werden kann. Die Fugen können jedoch auch verschiedene Aufgaben wahrnehmen. So können sie beispielsweise ein Material zur Absorption von Oberflächenfeuchtigkeit oder Oberflächenwasser enthalten. Das Fugenmaterial kann gegebenenfalls durch Quellung die Fuge dicht verschließen.

Alternativ kann das Fugenmaterial elektrostatische Aufladungen ableiten. beispielsweise in Richtung des Rohbodens oder auch gegen einen installierten Erdleiter.

Die Fugen können auch zur Aufnahme einer elastischen, plastischen oder aushärtenden Fugenmasse dienen. Weiterhin können die Fugen einen Spannungsausgleich in Bezug auf die sich bewegenden Gebäudemassen gestatten. In Betracht kommen hier mehrere kleine Mikrofugen mit 0,1 bis 0,5 mm Breite. Das Spiel, dass diese Mikrofugen ermöglichen, kann sich über eine größere Fläche zu Werten von beispielsweise 3 bis 6 mm addieren.

In die Fugen könnte auch ein Installationskanal integriert werden.

Fugenbänder können an einem der benachbarten Paneele befestigt sein oder auch in die Fuge eingelegt werden.

Im folgenden werden bevorzugte Ausführungsbeispiele der Erfindung anhand der beigefügten Zeichnung näher erläutert.
Fig. 1 : ist ein senkrechter Teilschnitt durch ein erfindungsgemäßes Fußbodenpaneel;
Fig. 2 : veranschaulicht in einem senkrechten Teilschnitt einen speziellen Aspekt eines derartigen Paneels;
Fig. 3 : ist ein Teilschnitt zur Veranschaulichung der Gestaltung einer Fuge; und
Fig. 4 : veranschaulicht eine Ausführungsform mit dämpfender Unterlage.

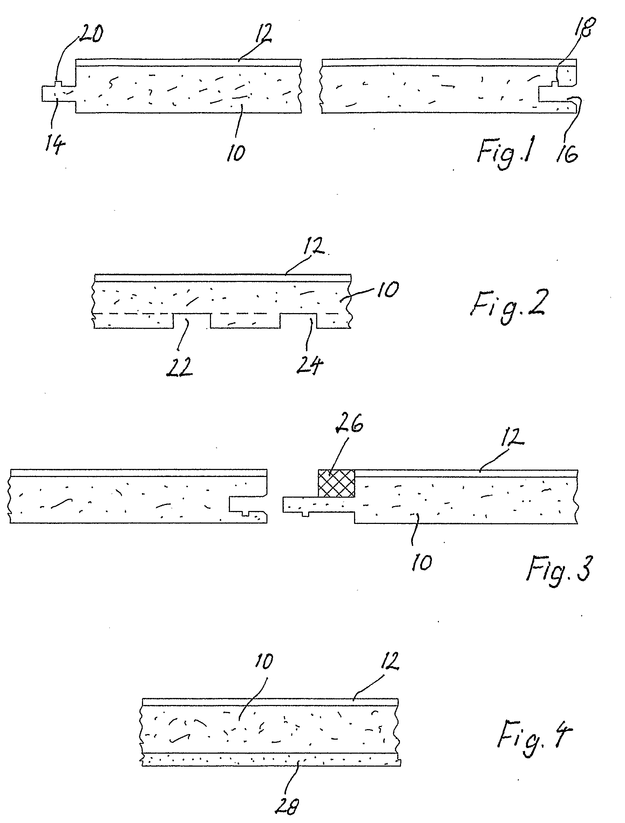

In Fig. 1 ist ein erfindungsgemäßes Fußbodenpaneel dargestellt. Es setzt sich zusammen aus einem Kern 10 in der Form einer Trägerplatte und einer auf diesen angebrachten Deckschicht 12, die zugleich Dekor- und Nutzschicht ist. Der Kern 10 besteht aus einem mineralischen Material, das unter hohem Druck kalt verpresst wird. Ein zusätzliches Bindemittel kann zugesetzt sein. Das Material kann auch eine Armierung erhalten, etwa eine Armierung aus Zellstofffasern, die aus Altpapier gewonnen sind.

Der Kern 10 besteht aus mineralischen Materialien, beispielsweise Gips. Die Trägerplatte gemäß Fig. 1 weist auf der linken Seite an der dortigen Kante eine vorspringende Feder 14 und auf der rechten Seite an der dortigen Kante eine Nut 16 auf. Nut und Feder verlaufen über die gesamte Länge der entsprechenden Kanten. Es ist davon auszugehen, dass Fig. 1 eine rechteckige oder quadratische Platte zeigt.

Es ist erkennbar, dass Nut und Feder 14, 16 insoweit modifiziert sind, als sich in der oberen Wange der Nut 16 eine Vertiefung 18 befindet, in die ein Vorsprung 20 auf der Oberseite der Feder 14 eintritt.

Die entsprechende Verrastung erfordert eine gewisse Elastizität der zusammenwirkenden Teile im Bereich von Nut und Feder. Bei Verfahren, die im vorliegenden Zusammenhang auch als "Einwinkeln" bezeichnet werden, sind die Anforderungen an die Elastizität des Materials wesentlich geringer.

Das erfindungsgemäß verwendete mineralische Material kann neben den Armierungsmaterialien auch sonstige Füllstoffe zur Verringerung des Gewichts, zur Erhöhung der Festigkeit, usw., enthalten.

Fig. 2 deutet einen Aspekt an, der bereits kurz angesprochen wurde. An der Unterseite des Kerns 10 können Kanäle 22, 24 ausgebildet sein, die in den Kern in der Form eines Kreuzrasters eingearbeitet sind und die Verlegung von Leitungen, insbesondere elektrische Leitungen, Heizungsleitungen, Druckluftleitungen, usw., gestatten.

Fig. 3 zeigt eine Ausführungsform, bei der zwischen zwei zusammengesetzten Fußbodenpaneelen eine Dichtleiste 26 vorgesehen ist. Die Dichtleiste 26 kann dekorativen oder funktionalen Zwecken dienen, wie zuvor angegeben wurde. Bei dem dargestellten Beispiel ist sie beispielsweise mit dem rechten der beiden Teile verbunden. Sie kann auch lose eingelegt werden.

Fig. 4 zeigt in einem weiteren senkrechten Schnitt eine Ausführungsform eines erfindungsgemäßen Fußbodenpaneels, das an der Unterseite des Kerns 10 eine Dämmschicht 28 aus einem Schaummaterial oder dergleichen aufweist, die zur weiteren Trittschalldämpfung und gegebenenfalls auch zur thermischen Dämpfung dient.

## Patentansprüche

1. Fußbodenpaneel mit einem plattenförmigen Kern (10) und einer oberen Deckschicht (12), mit mechanischen Verriegelungsmitteln (14, 16, 18, 20) wenigstens an zwei einander gegenüberliegenden Kanten der Fußbodenpaneele, wobei der Kern aus einem mineralischen Material besteht, das unter hohem Druck kalt verpresst ist, wobei die Deckschicht (12) mit dem Kern fest integriert ist und mit diesem eine zusammenhängende Einheit bildet, wobei die Verriegelungsmittel (14, 16, 18, 20) Nut- und Federverbindungen umfassen, die Verriegelungsmittel (14, 16, 18, 20) einstückig aus dem Material des Kerns (10) ausgebildet sind,
**dadurch gekennzeichnet,**
**dass** das Material des Kerns (10) eine Dichte von mehr als 1 000 kg/m³ aufweist,
**dass** die Deckschicht (12) zugleich Dekor- und Nutzschicht ist,
und das die Nut- und Federverbindungen der Verriegelungsmittel (14, 16, 18, 20) so modifiziert sind, dass sie ein Auseinanderdriften benachbarter Fußbodenpaneele durch Formschluss ausschließen.

2. Fußbodenpaneel nach Anspruch 1, **dadurch gekennzeichnet, dass** in den Kern ein Armierungsmaterial eingebettet ist.

3. Fußbodenpaneel nach Anspruch 1 oder 2, **dadurch gekennzeichnet, dass** das mineralische Material des Kerns Gips ist.

4. Fußbodenpaneel nach Anspruch 1 oder 2, **dadurch gekennzeichnet, dass** das mineralische Material des Kerns Zement ist.

5. Fußbodenpaneel nach Anspruch 1 und 2, **dadurch gekennzeichnet, dass** das mineralische Material Gesteinsmehl ist.

6. Fußbodenpaneel nach einem der Ansprüche 2 bis 5, **dadurch gekennzeichnet, dass** das Armierungsmaterial durch Zellstofffasern gebildet wird.

7. Fußbodenpaneel nach Anspruch 6, **dadurch gekennzeichnet, dass** die Zellstofffasern aus Altpapier gewonnen sind.

8. Fußbodenpaneel nach einem der Ansprüche 2 bis 7, **dadurch gekennzeichnet, dass** das Armierungsmaterial durch Textilfasern gebildet wird.

9. Fußbodenpaneel nach einem der Ansprüche 2 bis 8, **dadurch gekennzeichnet, dass** das Armierungsmaterial durch Glasfasern gebildet wird.

10. Fußbodenpaneel nach einem der Ansprüche 2 bis 9, **dadurch gekennzeichnet, dass** das Armierungsmaterial durch Kohlenstofffasern gebildet wird.

11. Fußbodenpaneel nach einem der Ansprüche 2 bis 10, **dadurch gekennzeichnet, dass** das Armierungsmaterial ein Volumenanteil von 5 bis 25% einnimmt.

12. Fußbodenpaneel nach einem der Ansprüche 1 bis 11, **dadurch gekennzeichnet, dass** benachbarte Fußbodenpaneele durch die Verriegelungsmittel mit Vorspannung zusammengespannt sind.

13. Fußbodenpaneel nach einem der Ansprüche 1 bis 11, **dadurch gekennzeichnet, dass** benachbarte Fußbodenpaneele durch die Verriegelungsmittel (14, 16) mit leichtem Spiel verbunden sind.

14. Fußbodenpaneel nach einem der Ansprüche 1 bis 12, **dadurch gekennzeichnet, dass** die Verriegelungsmittel (12, 14) getrennte Verbindungselemente einschließen, die mit zwei benachbarten Paneelen zusammenwirken.

15. Fußbodenpaneel nach einem der Ansprüche 1 bis 14, **dadurch gekennzeichnet, dass** die Deckschicht eine Textilschicht ist.

16. Fußbodenpaneel nach einem der Ansprüche 1 bis 14, **dadurch gekennzeichnet, dass** die Deckschicht eine Kunststoffschicht ist.

17. Fußbodenpaneel nach einem der Ansprüche 1 bis 16, **dadurch gekennzeichnet, dass** der verwendete Kunststoff der Deckschicht ein Elastomer ist.

18. Fußbodenpaneel nach Anspruch 17, **dadurch gekennzeichnet, dass** die Deckschicht aus Nadelvlies besteht.

19. Fußbodenpaneel nach einem der Ansprüche 1 bis 14, **dadurch gekennzeichnet, dass** die Deckschicht aus Linoleum besteht.

20. Fußbodenpaneel nach einem der Ansprüche 1 bis 14, **dadurch gekennzeichnet, dass** die Deckschicht aus PVC besteht.

21. Fußbodenpaneel nach einem der Ansprüche 1 bis 20, **dadurch gekennzeichnet, dass** die Deckschicht aus rutschsicherem Material besteht.

22. Fußbodenpaneel nach einem der Ansprüche 1 bis 21, **dadurch gekennzeichnet, dass** die Deckschicht aus leitfähigem Material besteht.

23. Fußbodenpaneel nach einem der Ansprüche 1 bis 14, **dadurch gekennzeichnet, dass** die Deckschicht aus einem Polyurethan-Material besteht.

24. Fußbodenpaneel nach einem der Ansprüche 1 bis 14, **dadurch gekennzeichnet, dass** die Deckschicht aus einem Polyolefin enthaltenen Material besteht.

25. Fußbodenpaneel nach einem der Ansprüche 1 bis 7, **dadurch gekennzeichnet, dass** auf der Rückseite des Kerns (10) Kanäle (22,24) zur Aufnahme von Leitungen vorgesehen sind.

26. Fußbodenpaneel nach einem der Ansprüche 1 bis 25, **dadurch gekennzeichnet, dass** in den Kern Heiz- und/oder Kühlleitungen eingebettet sind.

27. Fußbodenpaneel nach einem der vorhergehenden Ansprüche, **dadurch gekennzeichnet, dass** zwischen zwei benachbarten Platten Fugenleisten (26) vorgesehen sind.

28. Fußbodenpaneel nach Anspruch 27, **dadurch gekennzeichnet, dass** die Fugenleisten mit einer der beiden Paneele verbunden sind.

29. Fußbodenpaneel nach einem der Ansprüche 27 oder 28, **dadurch gekennzeichnet, dass** die Fugenleiste eine dekorative Fugenleiste ist.

30. Fußbodenpaneel nach einem der Ansprüche 1 bis 28, **dadurch gekennzeichnet, dass** die Fugenleiste flüssigkeitsabsorbierend ist.

31. Fußbodenpaneel nach einem der Ansprüche 27 oder 29, **dadurch gekennzeichnet, dass** die Fugenleiste elektrisch leitend ist.

32. Fußbodenpaneel nach einem der Ansprüche 27 oder 28, **dadurch gekennzeichnet, dass** die Fugenleiste elastisch ist.

33. Fußbodenpaneel nach einem vorhergehenden der Ansprüche, **dadurch gekennzeichnet, dass** das Fußbodenpaneel rechteckig ist.

34. Fußbodenpaneel nach Anspruch 33, **dadurch gekennzeichnet, dass** das Fußbodenpaneel an beiden einander gegenüberliegenden Kantenpaaren Verriegelungsmittel aufweist.

## Claims

1. Floor panel comprising a board-shaped core (10) and an upper top layer (12), with mechanical locking means (14, 16, 18, 20) on at least two mutually opposed edges of the floor panels, wherein the core consists of a mineral material which is cold-pressed at high pressure, wherein the top layer (12) is fixedly integrated with the core and forms a coherent unit therewith, wherein the locking means (14, 16, 18, 20) comprise tongue and groove connections, and wherein the locking means (14, 16, 18, 20) are integrally made from the material of the core (10),
**characterized in that**
the material of the core (10) has a density of more than 1000 kg/m³,
that the top layer (12) is decorative layer and wear layer in one, and
that the tongue and groove connections of the locking means (14, 16, 18, 20) are modified such that they exclude a drifting apart of adjacent floor panels by means of positive locking.

2. Floor panel according to claim 1, **characterized in that** a reinforcement material is embedded in the core.

3. Floor panel according to claim 1 or 2, **characterized in that** the mineral material of the core is gypsum.

4. Floor panel according to claim 1 or 2, **characterized in that** the mineral material of the core is cement.

5. Floor panel according to claim 1 and 2, **characterized in that** the mineral material is rock flour.

6. Floor panel according to any of the claims 2 to 5, **characterized in that** the reinforcement material is formed by cellulose fibers.

7. Floor panel according to claim 6, **characterized in that** the cellulose fibers are obtained from waste paper.

8. Floor panel according to any of the claims 2 to 7, **characterized in that** the reinforcement material is formed by textile fibers.

9. Floor panel according to any of the claims 2 to 8, **characterized in that** the reinforcement material is formed by glass fibers.

10. Floor panel according to any of the claims 2 to 9, **characterized in that** the reinforcement material is formed by carbon fibers.

11. Floor panel according to any of the claims 2 to 10, **characterized in that** the reinforcement material takes up a volume fraction of 5 to 25%.

12. Floor panel according to any of the claims 1 to 11, **characterized in that** adjacent floor panels are clamped together by the locking means with a pretension.

13. Floor panel according to any of the claims 1 to 11, **characterized in that** adjacent floor panels are interconnected by the locking means (14, 16) with a slight play.

14. Floor panel according to any of the claims 1 to 12, **characterized in that** the locking means (12, 14) include separate connection elements, which work in conjunction with two adjacent panels.

15. Floor panel according to any of the claims 1 to 14, **characterized in that** the top layer is a textile layer.

16. Floor panel according to any of the claims 1 to 14, **characterized in that** the top layer is a synthetic material layer.

17. Floor panel according to any of the claims 1 to 16, **characterized in that** the applied synthetic material of the top layer is an elastomer.

18. Floor panel according to claim 17, **characterized in that** the top layer consists of needle-punched nonwoven.

19. Floor panel according to any of the claims 1 to 14, **characterized in that** the top layer consists of linoleum.

20. Floor panel according to any of the claims 1 to 14, **characterized in that** the top layer consists of PVC.

21. Floor panel according to any of the claims 1 to 20, **characterized in that** the top layer consists of non-skid material.

22. Floor panel according to any of the claims 1 to 21, **characterized in that** the top layer consists of conductive material.

23. Floor panel according to any of the claims 1 to 14, **characterized in that** the top layer consists of a polyurethane material.

24. Floor panel according to any of the claims 1 to 14, **characterized in that** the top layer consists of a polyolefin-containing material.

25. Floor panel according to any of the claims 1 to 7, **characterized in that** on the back side of the core (10) channels (22, 24) are provided for receiving conduits.

26. Floor panel according to any of the claims 1 to 25, **characterized in that** heating and/or cooling conduits are embedded in the core.

27. Floor panel according to any of the preceding claims, **characterized in that** seam strips (26) are provided between two adjacent boards.

28. Floor panel according to claim 27, **characterized in that** the seam strips are connected to one of the two panels.

29. Floor panel according to any of the claims 27 or 28, **characterized in that** the seam strip is a decorative seam strip.

30. Floor panel according to any of the claims 1 to 28, **characterized in that** the seam strip is moisture-absorbing.

31. Floor panel according to any of the claims 27 or 29, **characterized in that** the seam strip is electrically conductive.

32. Floor panel according to any of the claims 27 or 28, **characterized in that** the seam strip is elastic.

33. Floor panel according to preceding one of the claims, **characterized in that** the floor panel is rectangular.

34. Floor panel according to claim 33, **characterized in that** the floor panel comprises locking means on both mutually opposed pairs of edges.

## Revendications

1. Panneau de sol comprenant une partie centrale en forme de plaque (10) et une couche supérieure de recouvrement (12), comprenant des moyens de verrouillage mécaniques (14, 16, 18, 20) au moins à deux bords opposés l'un à l'autre des panneaux de sol, la partie centrale étant constituée d'une matière minérale qui est comprimée à froid sous pression élevée, la couche de recouvrement (12) étant intégrée à demeure à la partie centrale et formant avec cette dernière une unité continue, les moyens de verrouillage (14, 16, 18, 20) comprenant des liaisons du type à rainures et à languettes, et les moyens de verrouillage (14, 16, 18, 20) étant réalisés en une seule pièce à partir de la matière de la partie centrale (10), **caractérisé en ce que** la matière de la partie centrale (10) présente une masse volumique supérieure à 1.000 kg/m³ ; **en ce que** la couche de recouvrement (12) représente de manière simultanée une couche de décoration et une couche d'usure ; et **en ce que** les liaisons du type à rainures et à languettes des moyens de verrouillage (14, 16, 18, 20) sont modifiées d'une manière telle qu'elles excluent un écartement réciproque des panneaux de sol, via une liaison par complémentarité de forme.

2. Panneau de sol selon la revendication 1, **caractérisé en ce qu'**une matière faisant office d'armature est incorporée dans la partie centrale.

3. Panneau de sol selon la revendication 1 ou 2, **caractérisé en ce que** la matière minérale de la partie centrale est du plâtre.

4. Panneau de sol selon la revendication 1 ou 2, **caractérisé en ce que** la matière minérale de la partie centrale est du ciment.

5. Panneau de sol selon les revendications 1 et 2, **caractérisé en ce que** la matière minérale de la partie centrale est de la poudre de roche.

6. Panneau de sol selon l'une quelconque des revendications 2 à 5, **caractérisé en ce que** la matière faisant office d'armature est réalisée à partir de fibres cellulosiques.

7. Panneau de sol selon la revendication 6, **caractérisé en ce qu'**on obtient les fibres cellulosiques à partir de papier de recyclage.

8. Panneau de sol selon l'une quelconque des revendications 2 à 7, **caractérisé en ce qu'**on obtient la matière faisant office d'armature via des fibres textiles.

9. Panneau de sol selon l'une quelconque des revendications 2 à 8, **caractérisé en ce qu'**on obtient la matière faisant office d'armature via des fibres de verre.

10. Panneau de sol selon l'une quelconque des revendications 2 à 9, **caractérisé en ce qu'**on obtient la matière faisant office d'armature via des fibres de carbone.

11. Panneau de sol selon l'une quelconque des revendications 2 à 10, **caractérisé en ce que** la matière faisant office d'armature représente une fraction volumique de 5 à 25%.

12. Panneau de sol selon l'une quelconque des revendications 1 à 11, **caractérisé en ce que** des panneaux de sol voisins sont serrés l'un contre l'autre via les moyens de verrouillage, avec une précontrainte.

13. Panneau de sol selon l'une quelconque des revendications 1 à 11, **caractérisé en ce que** des panneaux de sol voisins sont reliés via les moyens de verrouillage (14, 16) avec un léger jeu.

14. Panneau de sol selon l'une quelconque des revendications 1 à 12, **caractérisé en ce que** les moyens de verrouillage (14, 16) englobent des éléments de liaison séparés qui coopèrent avec deux panneaux voisins.

15. Panneau de sol selon l'une quelconque des revendications 1 à 14, **caractérisé en ce que** la couche de recouvrement est une couche de textile.

16. Panneau de sol selon l'une quelconque des revendications 1 à 14, **caractérisé en ce que** la couche de recouvrement est une couche de matière synthétique.

17. Panneau de sol selon l'une quelconque des revendications 1 à 16, **caractérisé en ce que** la matière synthétique que l'on utilise pour la couche de recouvrement est un élastomère.

18. Panneau de sol selon la revendication 17, **caractérisé en ce que** la couche de recouvrement est constituée d'un non-tissé aiguilleté.

19. Panneau de sol selon l'une quelconque des revendications 1 à 14, **caractérisé en ce que** la couche de recouvrement est constituée de linoléum.

20. Panneau de sol selon l'une quelconque des revendications 1 à 14, **caractérisé en ce que** la couche de recouvrement est constituée de PVC.

21. Panneau de sol selon l'une quelconque des revendications 1 à 20, **caractérisé en ce que** la couche de recouvrement est constituée d'une matière antidérapante.

22. Panneau de sol selon l'une quelconque des revendications 1 à 21, **caractérisé en ce que** la couche de recouvrement est constituée d'une matière conductrice.

23. Panneau de sol selon l'une quelconque des revendications 1 à 14, **caractérisé en ce que** la couche de recouvrement est constituée d'une matière à base de polyuréthane.

24. Panneau de sol selon l'une quelconque des revendications 1 à 14, **caractérisé en ce que** la couche de recouvrement est constituée d'une matière contenant une polyoléfine.

25. Panneau de sol selon l'une quelconque des revendications 1 à 7, **caractérisé en ce qu'**on prévoit, sur le côté dorsal de la partie centrale (10), des canaux (22, 24) pour la réception de conduits.

26. Panneau de sol selon l'une quelconque des revendications 1 à 25, **caractérisé en ce que** des conduits pour le chauffage et/ou pour le refroidissement sont incorporés dans la partie centrale.

27. Panneau de sol selon l'une quelconque des revendications précédentes, **caractérisé en ce qu'**on prévoit des couvre-joints (26) entre deux plaques voisines.

28. Panneau de sol selon la revendication 27, **caractérisé en ce que** les couvre-joints sont liés à un des deux panneaux.

29. Panneau de sol selon la revendication 27 ou 28, **caractérisé en ce que** le couvre-joint est un couvre-joint décoratif.

30. Panneau de sol selon l'une quelconque des revendications 1 à 28, **caractérisé en ce que** le couvre-joint absorbe l'humidité.

31. Panneau de sol selon l'une quelconque des revendications 27 ou 29, **caractérisé en ce que** le couvre-joint est électroconducteur.

32. Panneau de sol selon l'une quelconque des revendications 27 ou 28, **caractérisé en ce que** le couvre-joint est élastique.

33. Panneau de sol selon l'une quelconque des revendications précédentes, **caractérisé en ce que** le panneau de sol est rectangulaire.

34. Panneau de sol selon la revendication 33, **caractérisé en ce que** le panneau de sol présente des moyens de verrouillage à deux paires de bords opposées l'une à l'autre.
